# EUROPEAN PATENT APPLICATION

(11) **EP 4 725 905 A1**
(43) Date of publication of application: **15.04.2026**
(21) Application number: 25195980.5
(22) Date of filing: 14.08.2025
(51) Int. Cl.: C01D 15/00, C01G 28/00, H01M 10/0562

(54) **SULFIDE SOLID ELECTROLYTE AND PREPARATION METHOD AND APPLICATION THEREOF**

(30) Priority: 11.10.2024 CN 202411418926; 25.10.2024 CN 202411504947
(71) Applicant: AESC Japan Ltd., Yokohama-Shi, Kanagawa 220-0012 (JP)
(72) Inventor: YU, Le, Pudong New Area Shanghai, 201315 (CN); QU, Xinxin, Pudong New Area Shanghai, 201315 (CN)
(74) Representative: Becker, Eberhard

(57) **Abstract**

Disclosed are a sulfide solid electrolyte and a preparation method and an application thereof. The sulfide solid electrolyte has a molecular formula of LiₐP_{1-b}M_{b}S_{c}O_{d}Xₑ; wherein: 5<a<6; 0<b<1; 1.5<c<5, 0<d<2.5, 4<c+d<5, 1<e<2; M is selected from one or more of Al, Ga, In, Ti, Sc, As, Sb, Bi, V or Nb; X is selected from one or more of Cl, Br or I. Through the sulfide solid electrolyte and the preparation method and the application thereof provided by the present disclosure, it is possible to enhance the air stability and chemical stability of the sulfide solid electrolyte, increase the conductivity of the sulfide solid electrolyte, improve the air stability, and ameliorate the electrolyte/active material interface properties, thereby improving the compatibility with active materials, reducing packaging steps and the use of packaging materials, and thus significantly improving the capacity, number of cycles and energy density of lithium-ion batteries.

## Description

### BACKGROUND

### Technical Field

The present disclosure relates to lithium-ion batteries, and specifically relates to a sulfide solid electrolyte and a preparation method and an application thereof.

### Description of Related Art

Lithium-ion batteries, as important energy storage devices, have been commonly applied in electric vehicles and electronic products. In conventional liquid lithium batteries, both sides of a current collector are composed of the same electrode materials. All electrodes are immersed in the same electrolyte solution, and each of the electrodes is connected in parallel through external connecting wires; therefore, a large amount of inactive materials are integrated into the battery system. As a result, both volumetric energy density and gravimetric energy density of lithium-ion batteries suffer substantial diminishment.

Through introducing bipolar batteries, electrical connectors or other accessories may be omitted, and therefore the battery structure and shape are simple, which may significantly improve volumetric energy density and gravimetric energy density. However, the flow of liquid electrolyte solution in bipolar batteries may cause liquid junction short circuits in the battery, and therefore complex encapsulation processes are required, which will also involves the use of a large amount of packaging materials and will also result in loss of energy density of the battery. Because of the solid properties of solid electrolytes, solid electrolytes may solve the problems brought by liquid batteries. However, the issues of solid electrolytes lie in poor chemical stability and incompatibility with electrode materials, and so on.

### SUMMARY

The present disclosure provides a sulfide solid electrolyte and a preparation method and an application thereof. Through the sulfide solid electrolyte and the preparation method and application thereof provided by the present disclosure, it is possible to enhance the air stability and chemical stability of the sulfide solid electrolyte, improve the conductivity of the sulfide solid electrolyte, increase air stability, and ameliorate electrolyte/active material interface properties, thereby improving compatibility with active materials, reducing packaging steps and use of packaging materials, and significantly increasing battery capacity, number of cycles, and energy density of bipolar batteries.

To solve the above technical problems, the present disclosure is implemented through the following technical solutions.

The present disclosure provides a sulfide solid electrolyte. The sulfide solid electrolyte has a molecular formula of LiₐP_{1-b}M_{b}S_{c}O_{d}Xₑ; wherein: 5<a<6; 0<b<1; 1.5<c<5, 0<d<2.5, 4<c+d<5, 1<e<2; M is selected from one or more of Al, Ga, In, Ti, Sc, As, Sb, Bi, V or Nb; X is selected from one or more of Cl, Br or I.

In an embodiment of the present disclosure, M is selected from one or more of Sb, In or Bi.

In an embodiment of the present disclosure, X is selected from Cl; a value range of b 0<b<0.1.

The present disclosure also provides a preparation method for the above-mentioned sulfide solid electrolyte, including the following steps:
According to a chemical formula of the sulfide solid electrolyte, after raw materials are mixed uniformly according to stoichiometry, the raw materials are placed in a ball mill jar for ball milling to obtain sulfide solid electrolyte precursor powder; and
The sulfide solid electrolyte precursor powder is subjected to calcination at a preset temperature to obtain the sulfide solid electrolyte.

In an embodiment of the present disclosure, the raw materials include Li₂S, LiX, P₂S₅ and oxides corresponding to M elements, X is selected from one or more of Cl, Br or I, M is selected from one or more of Al, Ga, In, Ti, Sc, As, Sb, Bi, V or Nb.

In an embodiment of the present disclosure, a ball milling time is 20 hours to 30 hours, a ball milling speed is 500rpm to 600rpm, and a ball-to-material ratio is 35:1 to 45:1.

In an embodiment of the present disclosure, the preset temperature is 450°C to 550°C, and a time for the calcination is 20 hours to 30 hours.

The present disclosure also provides an all-solid-state lithium-ion battery, at least including:
A plurality of bipolar electrode sheets, wherein positive electrode active material layers and negative electrode active material layers are respectively disposed on both sides of the bipolar electrode sheets, the positive electrode active material layers and the negative electrode active material layers between the adjacent bipolar electrode sheets are arranged opposite to each other; and
A solid electrolyte film, wherein the solid electrolyte film is disposed between the adjacent bipolar electrode sheets;
The positive electrode active material layers, the negative electrode active material layers and the solid electrolyte film include the aforementioned sulfide solid electrolyte.

In an embodiment of the present disclosure, in the positive electrode active material layers or the negative electrode active material layers, a content of the sulfide solid electrolyte is 20wt% to 30wt%.

In an embodiment of the present disclosure, the solid electrolyte film includes the sulfide solid electrolyte and a binder, and the solid electrolyte film is obtained through a dry process preparation method or a wet process preparation method.

The present disclosure also provides an electronic device, including the aforementioned all-solid-state lithium-ion battery.

In summary, the present disclosure provides a sulfide solid electrolyte and a preparation method and an application thereof, which may enhance an intrinsic resistance of the sulfide solid electrolyte to atmospheric degradation, and effectively reduce the generation of H₂S, increase the possibility of the battery in actual production, thereby enhancing the air stability and chemical stability of the sulfide solid electrolyte. In this way, the sulfide solid electrolyte has a high stability and a specific reactivity, which may improve the conductivity of the sulfide solid electrolyte, enhance air stability and ameliorate electrolyte/active material interface properties, thereby improving compatibility with active materials. The present disclosure may stabilize a matrix structure of the sulfide solid electrolyte to improve ionic conductivity and electrochemical stability, and improve voltage stability. Through adopting solid electrolyte film in bipolar battery, it is possible to reduce packaging steps, simplify the packaging process of bipolar battery, significantly reduce the use of packaging materials, and greatly increase the battery capacity, number of cycles and energy density of bipolar battery, while enhancing the safety performance of lithium ions.

### DESCRIPTION OF THE EMBODIMENTS

The following specific examples illustrate the implementation of the present disclosure. Those skilled in the art may easily understand other advantages and effects of the present disclosure from the content disclosed in this specification. The present disclosure may also be implemented or applied through other different specific examples, and various details in this specification may also be modified or changed based on different viewpoints and applications without departing from the spirit of the present disclosure.

It should be understood that the present disclosure may be implemented in different forms and should not be interpreted as limited to the examples proposed herein. On the contrary, providing these examples will make the disclosure thorough and complete, and will fully convey the scope of the present disclosure to those skilled in the art.

The technical solutions of the present disclosure are further described in detail below in combination with several examples. Clearly, the described examples are only part of the examples of the present disclosure, not all examples. Based on the examples in the present disclosure, all other examples obtained by those of ordinary skill in the art without creative effort fall within the scope to be protected by the present disclosure.

The present disclosure provides a sulfide solid electrolyte. The sulfide solid electrolyte has a molecular formula of LiₐP_{1-b}M_{b}S_{c}O_{d}Xₑ, wherein, 5<a<6; 0<b<1; 1.5<c<5, 0<d<2.5, 4<c+d<5, 1<e<2; M is selected from, for example, one or more of Al, Ga, In, Ti, Sc, Sb, Bi, As, V or Nb, etc.; X is selected from, for example, one or more of Cl, Br or I. Introduction of +3 or +5 valence M elements and O elements into the halogen-rich sulfide solid electrolyte will form P-O and M-S bonds in a crystal structure, thereby increasing the intrinsic resistance to atmospheric degradation, and effectively reducing the generation of H₂S, increasing the possibility of the battery in actual production, thereby ameliorating the air stability and chemical stability of the sulfide solid electrolyte.

In an embodiment of the present disclosure, M is selected from, for example, one or more of Sb, In or Bi, the formed Sb-S/Bi-S/In-S bonds have a higher binding energy, making the chemical bonds stronger and difficult to be damaged by external influences, so that the sulfide solid electrolyte has a higher stability and a specific reactivity, the conductivity of the sulfide solid electrolyte may be improved, the air stability may be improved, and electrolyte/active material interface properties may be ameliorated, thereby improving compatibility with active materials. X is, for example, selected from Cl, due to the introduction of halogen elements, the matrix structure of the sulfide solid electrolyte is stabilized to improve ionic conductivity and electrochemical stability, and voltage stability is ameliorated as well. The value range of b is 0<b<0.1. In an embodiment of the present disclosure, when M is +5 valence, b is mostly preferably 0.04, when M is +3 valence, b is most preferably 0.02 to optimize the battery capacity, number of cycles and energy density of the lithium-ion battery.

The present disclosure also provides a preparation method for a sulfide solid electrolyte, at least including the following steps:
According to a chemical formula of the sulfide solid electrolyte, after raw materials are mixed uniformly according to stoichiometry, the raw materials are placed in a ball mill jar for ball milling to obtain sulfide solid electrolyte precursor powder;
The sulfide solid electrolyte precursor powder is subjected to calcination at a preset temperature to obtain the sulfide solid electrolyte.

In an embodiment of the present disclosure, according to the chemical formula, which is LiₐP_{1-b}M_{b}S_{c}O_{d}Xₑ, of the sulfide solid electrolyte, the raw materials are mixed uniformly according to stoichiometry, wherein, the raw materials, for example, include Li₂S, LiX, P₂S₅ and oxides corresponding to M elements, etc.; X is, for example, selected from one or more of Cl, Br or I; M is, for example, selected from one or more of Al, Ga, In, Ti, Sc, As, Sb, Bi, As, V or Nb, etc. After the raw materials are mixed uniformly, the raw materials are placed in a ball mill jar, wherein, a ball-to-material ratio is, for example, 35:1 to 45:1, a ball milling speed is, for example, 500rpm to 600rpm, and a ball milling time is, for example, 20 hours to 30 hours, thereby obtaining the sulfide solid electrolyte precursor powder.

In an embodiment of the present disclosure, the sulfide solid electrolyte precursor powder is subjected to calcination at a preset temperature, wherein, the preset temperature is 450°C to 550°C, a time for calcination is 20 hours to 30 hours, thereby obtaining the sulfide solid electrolyte.

The present disclosure also provides an all-solid-state lithium-ion battery, including multiple bipolar electrode sheets and a solid electrolyte film. Positive electrode active material layers and negative electrode active material layers are respectively disposed on both sides of the bipolar electrode sheets. The positive electrode active material layers and the negative electrode active material layers between the adjacent bipolar electrode sheets are arranged opposite to each other. The solid electrolyte film is disposed between the adjacent bipolar electrode sheets. The positive electrode active material layers, the negative electrode active material layers and the solid electrolyte film include the aforementioned sulfide solid electrolyte to enhance the performance of the all-solid-state lithium-ion battery.

In an embodiment of the present disclosure, the solid electrolyte film is, for example, prepared through a dry process. Specifically, the sulfide solid electrolyte LiₐP_{1-b}M_{b}S_{c}O_{d}Xₑ and a dry process binder are mixed according to a mass ratio, which is 99.5:0.5 to 96:4, for example. Then, the mixture is placed in a mortar for repeated grinding, then manually and repeatedly rolled into a film, and repeatedly rolled in a vertical rolling mill to a preset thickness. The dry process binder is, for example, polytetrafluoroethylene (PTFE) and its derivatives, etc. In an embodiment of the present disclosure, the preset thickness of the solid electrolyte film is, for example, 10µm to 20µm. Through compositing the sulfide solid electrolyte with the binder, the processing performance of the sulfide solid electrolyte may be significantly improved, and the mechanical stability of the solid electrolyte film may be ameliorated.

In another embodiment of the present disclosure, the solid electrolyte film is, for example, prepared through a wet process. Specifically, a wet process binder is dissolved in an organic solvent to a preset concentration. Then, the sulfide solid electrolyte LiₐP_{1-b}M_{b}S_{c}O_{d}Xₑ is added according to a mass ratio, mixed uniformly to obtain a solid electrolyte slurry. The solid electrolyte slurry is, for example, coated onto a mold through a coating machine. After the organic solvent is volatilized at room temperature, the solid electrolyte slurry is placed in a vacuum oven for drying and demolding. The wet process binder includes but is not limited to one or more of fluororubber, polyvinylidene difluoride (PVDF) and its derivatives, or hydrogenated nitrile rubber (HNBR) and its derivatives, etc. The organic solvent is, for example, butyl butyrate, etc. The preset concentration is, for example, 8wt% to 12wt%. The mass ratio of the sulfide solid electrolyte to the wet process binder is, for example, 99.5:0.5 to 96:4. The preset thickness of the finally obtained solid electrolyte film is, for example, 10µm to 20µm. In another embodiment of the present disclosure, porous high-strength substrates such as non-woven fabric or polyimide are adopted as support, and coated with the solid electrolyte slurry to obtain the solid electrolyte film. Through controlling the mass ratio of the sulfide solid electrolyte to the binder, both the film-forming performance and the conductive performance of the solid electrolyte film are balanced.

In an embodiment of the present disclosure, the bipolar electrode sheet includes a bipolar current collector and a positive electrode active material layer and a negative electrode active material layer respectively disposed on both side surfaces of the bipolar current collector. The bipolar current collector includes, for example, a positive electrode conductive layer, an adhesive conductive layer and a negative electrode conductive layer. The adhesive conductive layer is disposed between the positive electrode conductive layer and the negative electrode conductive layer. In an embodiment of the present disclosure, the positive electrode conductive layer, for example, includes but is not limited to at least one of aluminum, aluminum alloy, titanium, nickel, magnesium or magnesium, etc. The negative electrode conductive layer, for example, includes but is not limited to at least one of copper, copper alloy, nickel, nickel alloy or stainless steel, etc. A material of the adhesive conductive layer, for example, includes but is not limited to at least one of conductive carbon black, acetylene black, conductive graphite, conductive carbon nanotube, conductive fiber, aluminum metal or copper metal, etc. The present disclosure does not limit thicknesses of the positive electrode conductive layer, the adhesive conductive layer and the negative electrode conductive layer, and the thicknesses thereof are specifically selected according to manufacturing requirements. In a specific example of the present disclosure, the thickness of the positive electrode conductive layer is, for example, 8µm to 10µm, the thickness of the adhesive conductive layer is, for example, 4µm to 9µm, and the thickness of the negative electrode conductive layer is, for example, 8µm to 10µm.

In an embodiment of the present disclosure, the positive electrode active material layer is disposed on the positive electrode conductive layer. The positive electrode active material layer includes a positive electrode active material, a conductive agent, a binder and the aforementioned sulfide solid electrolyte. The present disclosure does not specifically limit the specific types of the positive electrode active material, the conductive agent and the binder, materials known in the art that can be used in lithium-ion batteries may be adopted, and those skilled in the art may make selections according to actual requirements. In an embodiment of the present disclosure, the positive electrode active material includes but is not limited to one or more of lithium cobalt oxide (LCO), lithium nickel oxide (LNO), lithium manganese oxide (LMO), lithium nickel manganese oxide (LNMO), lithium nickel cobalt manganese oxide (NCM), lithium nickel cobalt aluminum oxide (NCA), lithium-rich manganese-based oxide (LRMO) and lithium-containing phosphate, etc. The lithium-containing phosphate includes but is not limited to lithium manganese iron phosphate, lithium iron phosphate, lithium manganese phosphate, etc. The binder is, for example, selected from polyvinylidene fluoride or polytetrafluoroethylene, etc. The conductive agent is, for example, selected from one of carbon black, acetylene black, graphene, carbon nanotube or carbon nanofiber, etc., or a combination of two or more of the above mixed in any ratio. In the positive electrode active material layer, a mass ratio of the positive electrode active material, the conductive agent, the binder and the sulfide solid electrolyte is (61-88):(1-2):(1-2):(20-25), for example.

In an embodiment of the present disclosure, the negative electrode active material layer is disposed on the negative electrode conductive layer. The negative electrode active material layer includes a negative electrode active material, a conductive agent, a binder and the aforementioned sulfide solid electrolyte. The present disclosure does not specifically limit the specific types of the negative electrode active material, the conductive agent and the binder, materials known in the art that can be used in lithium-ion batteries may be adopted, and those skilled in the art may make selections according to actual requirements. In an embodiment of the present disclosure, the negative electrode active material includes but is not limited to one or more of artificial graphite, natural graphite, soft carbon, hard carbon, pure silicon, silicon oxide compound or silicon carbon compound, etc. The conductive agent is, for example, selected from one of carbon black, acetylene black, graphene, carbon nanotube or carbon nanofiber, etc., or a combination of two or more of the above mixed in any ratio. The binder is selected from any one of polyacrylic acid (PAA), lithium acrylate (PAALi), sodium polyacrylate (PAAS), polyacrylic amide (PAM), polyvinyl alcohol (PVA) or polymerized styrene butadiene rubber (SBR), or combinations of the above mixed in any ratio. In the negative electrode active material layer, a mass ratio of the negative electrode active material, the conductive agent, the binder and the sulfide solid electrolyte is (61-88):(1-2):(1-2):(20-25), for example.

In an embodiment of the present disclosure, the positive electrode active material, the conductive agent, the binder and the sulfide solid electrolyte are dispersed in a non-polar solvent according to a mass ratio. The non-polar solvent is, for example, xylene, and so on for forming a uniform positive electrode slurry. The positive electrode slurry is coated on the positive electrode conductive layer (i.e., current collector) of the bipolar current collector. After performing drying, cold pressing and other processes, the positive electrode active material layer is formed on the bipolar current collector. The negative electrode active material, the conductive agent, the binder and the sulfide solid electrolyte are dispersed in a non-polar solvent according to a mass ratio. The non-polar solvent is, for example, xylene and so on for forming a uniform negative electrode slurry. The negative electrode slurry is coated on the negative electrode conductive layer of the bipolar current collector on which the positive electrode active material layer has been formed, after performing drying, cold pressing and other processes, the bipolar electrode sheet is obtained. In other examples, the present disclosure does not limit the preparation method, process, and the like of the positive electrode active material layer and negative electrode active material layer, and the dry process may also be adopted for preparation.

In an embodiment of the present disclosure, the multiple bipolar electrode sheets are disposed in a stacked arrangement. In the process of sequentially stacking the multiple bipolar electrode sheets along the stacking direction, the positive electrode active material layer and negative electrode active material layer of the adjacent bipolar electrode sheets are disposed opposite to each other, and the solid electrolyte film is disposed between the adjacent stacked electrode sheets. The solid electrolyte film is disposed between the positive electrode active material layer and the negative electrode active material layer of the adjacent bipolar electrode sheets to complete the series connection of the multiple bipolar electrode sheets, finally forming a bipolar battery having, for example, 10 battery cells. Ultimately, the bipolar battery is externally packaged with an aluminum plastic film to complete the one and only one packaging process, followed by formation, capacity grading and aging, etc. Through adopting the solid electrolyte film in the bipolar battery, packaging steps may be reduced, the use of packaging materials is greatly reduced, and the energy density of the bipolar battery may be significantly improved. Meanwhile, the all-solid-state lithium-ion battery omits the use of the electrolyte solution, which may also improve the safety performance of the lithium-ion battery.

Hereinafter, the present disclosure will be explained more specifically through reference to examples, these examples should not be understood as being restrictive. Within the scope consistent with the gist of the present disclosure, appropriate modifications may be made, all of which fall within the technical scope of the present disclosure.

### Example 1

The sulfide solid electrolyte Li_{5.5}P_{0.98}In_{0.02}S₃O_{1.5}Cl_{1.46} and the binder PTFE were mixed according to a mass ratio of 99: 1, and ground repeatedly in a mortar, then manually and repeatedly rolled into a film, and repeatedly rolled to 15µm in a vertical rolling mill to obtain the solid electrolyte film.

The positive electrode conductive layer of the bipolar current collector was an aluminum foil with a thickness of 8µm. The adhesive conductive layer was conductive carbon black with a thickness of 5µm, and the negative electrode conductive layer was a copper foil with a thickness of 8µm. LiNi_{0.9}Co_{0.05}Mn_{0.05}O₂, carbon black, polyvinylidene fluoride and Li_{5.5}P_{0.98}In_{0.02}S₃O_{1.5}Cl_{1.46} were mixed according to a mass ratio of 75:1:1:23, then xylene was added and stirred until the system becomes uniform to obtain the positive electrode slurry. The positive electrode slurry was uniformly coated on the positive electrode conductive layer of the bipolar current collector, and after performing drying, cold pressing and other processes, the positive electrode active material layer was obtained. A silicon-carbon compound, carbon black, styrene-butadiene rubber and Li_{5.5}P_{0.98}In_{0.02}S₃O_{1.5}Cl_{1.46} were mixed according to a mass ratio of 75:1:1:23, then xylene was added and stirred until the system becomes uniform to obtain the negative electrode slurry. The negative electrode slurry was uniformly coated on the negative electrode conductive layer of the bipolar current collector, and after performing drying, cold pressing and other processes, the bipolar electrode sheet was obtained.

The bipolar electrode sheet and the solid electrolyte film were assembled, packaged, formed, graded and aged to obtain the all-solid-state lithium-ion battery.

### Example 2

The solid electrolyte film was obtained by using the wet process preparation method. A mass ratio of Li_{5.5}P_{0.98}In_{0.02}S₃O_{1.5}Cl_{1.46} and the binder fluororubber was 99:1, and other operations maintained the same as Example 1.

### Example 3

The sulfide solid electrolyte in the solid electrolyte film and the bipolar electrode sheet was replaced by Li_{5.5}P_{0.97}In_{0.03}S₃O_{1.5}Cl_{1.44}, and other operations maintained the same as Example 1.

### Example 4

The sulfide solid electrolyte in the solid electrolyte film and the bipolar electrode sheet was replaced by Li_{5.5}P_{0.99}In_{0.01}S₃O_{1.5}Cl_{1.48}, and other operations maintained the same as Example 1.

### Example 5

The sulfide solid electrolyte in the solid electrolyte film and the bipolar electrode sheet was replaced by Li_{5.5}P_{0.98}Al_{0.02}S₃O_{1.5}Cl_{1.46}, and other operations maintained the same as Example 1.

### Example 6

The sulfide solid electrolyte in the solid electrolyte film and the bipolar electrode sheet was replaced by Li_{5.5}P_{0.98}Ga_{0.02}S₃O_{1.5}Cl_{1.46}, and other operations maintained the same as Example 1.

### Example 7

The sulfide solid electrolyte in the solid electrolyte film and the bipolar electrode sheet was replaced by Li_{5.5}P_{0.98}Sb_{0.02}S₃O_{1.5}Cl_{1.46}, and other operations maintained the same as Example 1.

### Example 8

The sulfide solid electrolyte in the solid electrolyte film and the bipolar electrode sheet was replaced by Li_{5.5}P_{0.98}Bi_{0.02}S₃O_{1.5}Cl_{1.46}, and other operations maintained the same as Example 1.

### Example 9

The sulfide solid electrolyte in the solid electrolyte film and the bipolar electrode sheet was replaced by Li_{5.5}P_{0.98}Sc_{0.02}S₃O_{1.5}Cl_{1.46}, and other operations maintained the same as Example 1.

### Example 10

The sulfide solid electrolyte in the solid electrolyte film and the bipolar electrode sheet was replaced by Li_{5.5}P_{0.98}Ti_{0.02}S₃O_{1.5}Cl_{1.46}, and other operations maintained the same as Example 1.

### Example 11

The sulfide solid electrolyte in the solid electrolyte film and the bipolar electrode sheet was replaced by Li_{5.5}P_{0.98}As_{0.02}S₃O_{1.5}Cl_{1.46}, and other operations maintained the same as Example 1.

### Example 12

The sulfide solid electrolyte in the solid electrolyte film and the bipolar electrode sheet was replaced by Li_{5.5}P_{0.96}As_{0.04}S₃O_{1.5}Cl_{1.5}, and other operations maintained the same as Example 1.

### Example 13

The sulfide solid electrolyte in the solid electrolyte film and the bipolar electrode sheet was replaced by Li_{5.5}P_{0.92}As_{0.08}S₃O_{1.5}Cl_{1.5}, and other operations maintained the same as Example 1.

### Example 14

The sulfide solid electrolyte in the solid electrolyte film and the bipolar electrode sheet was replaced by Li_{5.5}P_{0.96}V_{0.04}S₃O_{1.5}Cl_{1.5}, and other operations maintained the same as Example 1.

### Example 15

The sulfide solid electrolyte in the solid electrolyte film and the bipolar electrode sheet was replaced by Li_{5.5}P_{0.96}Nb_{0.04}S₃O_{1.5}Cl_{1.5}, and other operations maintained the same as Example 1.

### Example 16

The sulfide solid electrolyte in the solid electrolyte film and the bipolar electrode sheet was replaced by Li_{5.5}P_{0.98}In_{0.02}S₃O_{1.5}Br_{1.46}, and other operations maintained the same as Example 1.

### Example 17

The sulfide solid electrolyte in the solid electrolyte film and the bipolar electrode sheet was replaced by Li_{5.5}P_{0.98}In_{0.02}S₃O_{1.5}I_{1.46}, and other operations maintained the same as Example 1.

### Comparative Example 1

The solid electrolyte film was replaced by the electrolyte solution. In the electrolyte solution, a lithium salt was LiPF₆, a solvent was ethylene carbonate (EC) and diethyl carbonate (DEC), and a mass ratio of EC to DEC in the solvent was 3:7. A concentration of LiPF₆ in the electrolyte solution was 1mol/L, and other operations maintained the same as Example 1.

### Comparative Example 2

The mass ratio of EC to DEC in the solvent was 5:5, and other operations maintained the same as Comparative Example 1.

### Comparative Example 3

Diethyl carbonate was replaced by propylene carbonate (PC), and other operations maintained the same as Comparative Example 1.

In the present disclosure, Examples 1-17 and Comparative Examples 1-3 adopted different sulfide solid electrolytes and preparation methods to obtain the lithium-ion batteries. In an environment at 25°C, long cycle charge-discharge was performed on the obtained lithium-ion batteries, the discharge capacity was measured, and the energy density was calculated. An operation voltage range for battery testing was 2.8V to 4.3V, and the charge-discharge rate was 1C/1C. The discharge capacity of the first cycle was recorded as 1C discharge capacity. When the battery capacity reached 80% (80% State of Health, 80% SOH) of the first cycle capacity, the test was ended, and the number of cycles at room temperature was obtained.

**Table 1. Performance test results of lithium-ion batteries in Examples 1-17 and Comparative Examples 1-3**

| Group | Sulfide solid electrolyte | Preparation of solid electrolyte film and binder | Discharge capacity at 1c (mah/g) | Number of cycles | Energy density (wh/kg) |
|---|---|---|---|---|---|
| Example 1 | Li_{5.5}P_{0.98}In_{0.02}S₃O_{1.5}Cl_{1.46} | Dry process with 1wt% of PTFE | 220 | 1087 | 456 |
| Example 2 | Li_{5.5}P_{0.98}In_{0.02}S₃O_{1.5}Cl_{1.46} | Wet process with 1wt% of fluororubber | 212 | 1023 | 450 |
| Example 3 | Li_{5.5}P_{0.97}In_{0.03}S₃O_{1.5}Cl_{1.44} | Dry process with 1wt% of PTFE | 208 | 972 | 442 |
| Example 4 | Li_{5.5}P_{0.99}In_{0.01}S₃O_{1.5}Cl_{1.48} | Dry process with 1wt% of PTFE | 204 | 965 | 441 |
| Example 5 | Li_{5.5}P_{0.98}Al_{0.02}S₃O_{1.5}Cl_{1.46} | Dry process with 1wt% of PTFE | 216 | 1067 | 453 |
| Example 6 | Li_{5.5}P_{0.98}Ga_{0.02}S₃O_{1.5}Cl_{1.46} | Dry process with 1wt% of PTFE | 218 | 1072 | 454 |
| Example 7 | Li_{5.5}P_{0.98}Sb_{0.02}S₃O_{1.5}Cl_{1.46} | Dry process with 1wt% of PTFE | 217 | 1068 | 453 |
| Example 8 | Li_{5.5}P_{0.98}Bi_{0.02}S₃O_{1.5}Cl_{1.46} | Dry process with 1wt% of PTFE | 212 | 1034 | 450 |
| Example 9 | Li_{5.5}P_{0.98}Sc_{0.02}S₃O_{1.5}Cl_{1.46} | Dry process with 1wt% of PTFE | 209 | 1002 | 448 |
| Example 10 | Li_{5.5}P_{0.98}Ti_{0.02}S₃O_{1.5}Cl_{1.48} | Dry process with 1wt% of PTFE | 210 | 1008 | 449 |
| Example 11 | Li_{5.5}P_{0.95}As_{0.02}S₃O_{1.5}Cl_{1.5} | Dry process with 1wt% of PTFE | 205 | 970 | 439 |
| Example 12 | Li_{5.5}P_{0.96}As_{0.04}S₃O_{1.5}Cl_{1.5} | Dry process with 1wt% of PTFE | 218 | 1067 | 452 |
| Example 13 | Li_{5.5}P_{0.92}As_{0.08}S₃O_{1.5}Cl_{1.5} | Dry process with 1wt% of PTFE | 203 | 998 | 446 |
| Example 14 | Li_{5.5}P_{0.96}V_{0.04}S₃O_{1.5}Cl_{1.5} | Dry process with 1wt% of PTFE | 212 | 1038 | 451 |
| Example 15 | Li_{5.5}P_{0.96}Nb_{0.04}S₃O_{1.5}Cl_{1.5} | Dry process with 1wt% of PTFE | 213 | 1051 | 452 |
| Example 16 | Li_{5.5}P_{0.98}In_{0.02}S₃O_{1.5}Br_{1.46} | Dry process with 1wt% of PTFE | 214 | 1073 | 453 |
| Example 17 | Li_{5.5}P_{0.98}In_{0.02}S₃O_{1.5}I_{1.46} | Dry process with 1wt% of PTFE | 215 | 1098 | 454 |
| Comparative Example 1 | Li_{5.5}P_{0.98}In_{0.02}S₃O_{1.5}Cl_{1.46} | EC:DEC=3:7 | 0 | / | / |
| Comparative Example 2 | Li_{5.5}P_{0.98}In_{0.02}S₃O_{1.5}Cl_{1.46} | EC:DEC=5:5 | 0 | / | / |
| Comparative Example 3 | Li_{5.5}P_{0.98}In_{0.02}S₃O_{1.5}Cl_{1.46} | EC:PC=3:7 | 0 | / | / |

Please refer to Table 1, comparing Examples 1-17 with Comparative Examples 1-3, when adopting the sulfide solid electrolyte of the present disclosure to prepare the all-solid-state bipolar batteries, the capacity, the number of cycles and the energy density of the lithium-ion batteries may be improved. Taking the positive electrode active material as ternary nine-series and the negative electrode as silicon-based negative electrode as an example to match the designed sulfide solid electrolyte, the energy density of the lithium-ion batteries may be as high as 450Wh/kg or higher. Moreover, the full battery after one and only final packaging may stably cycle for more than 1000 turns. The packaging steps and the use of packaging materials may be reduced, while the energy density of batteries may be significantly improved. After adopting the electrolyte solution to replace the solid electrolyte film, the lithium-ion batteries experiences short-circuiting. Therefore, the sulfide solid electrolyte applied to the bipolar batteries may simplify the packaging process of the bipolar batteries and improving the performance of the bipolar batteries.

Please refer to Table 1, comparing Example 1 with Example 2, when the solid electrolyte films are prepared through different preparation processes, such as the dry process preparation method and the wet process preparation method, the lithium-ion electrodes have equivalent performance, indicating that the solid electrolyte films obtained through different preparation methods may all improve the performance of the lithium-ion batteries. Comparing Examples 1, 3, 4 with Examples 11-13, it may be known that when a content of M in the sulfide solid electrolyte LiₐP_{1-b}M_{b}S_{c}O_{d}Xₑ increases, the capacity, the number of cycles and the energy density of the lithium-ion batteries first increase and then decrease, indicating that the preferred value range of b is 0<b<0.1. Moreover, when M is +5 valence, b is most preferably 0.04, when M is +3 valence, b is most preferably 0.02, thereby optimizing the battery capacity, the number of cycles and the energy density of the lithium-ion batteries.

Please refer to Table 1, comparing Example 1 with Examples 5-10 as well as comparing Example 12 with Examples 14-15, it may be known that when M in the sulfide solid electrolyte LiₐP_{1-b}M_{b}S_{c}O_{d}Xₑ is selected from different +3 valence or +5 valence elements, and b is selected with a preferred content, the battery capacity, the number of cycles and the energy density of the lithium-ion batteries all maintain at a high level, indicating that selecting different M elements may all improve the performance of the lithium-ion batteries. Comparing Example 1 with Examples 16-17, when X in the sulfide solid electrolyte LiₐP_{1-b}M_{b}S_{c}O_{d}Xₑ is selected from different halogen atoms, the battery capacity, the number of cycles and the energy density of the lithium-ion batteries all maintain at a high level, and when Cl is selected, the performance of the lithium-ion batteries is optimal.

The present disclosure also provides an electronic device. The electronic device includes at least one of the aforementioned lithium-ion batteries, and the lithium-ion battery is used for providing electrical energy. The electronic device may be a vehicle, a mobile phone, a portable device, a laptop computer, a ship, a spacecraft, an electric toy and an electric tool, etc. In an embodiment of the present disclosure, the vehicle is, for example, a new energy vehicle. The new energy vehicle may be a pure electric vehicle, a hybrid vehicle or a range-extended vehicle, etc. The spacecraft include aircraft, rockets, space shuttles and spaceships, etc. The electric toy includes a fixed or mobile electric toy, for example, includes a game console, an electric car toy, an electric ship toy and an electric airplane toy, etc. The electric tool includes a metal cutting electric tool, a grinding electric tool, an assembly electric tool and a railway electric tool, for example, includes an electric drill, an electric grinder, an electric wrench, an electric screwdriver, an electric hammer, an impact drill, a concrete vibrator and an electric planer, etc. The electronic device includes the aforementioned lithium-ion battery, therefore has the advantages of the aforementioned lithium-ion battery, which will not be elaborated further herein.

In summary, the present disclosure provides a sulfide solid electrolyte and a preparation method and an application thereof. Through introducing +3 or +5 valence M elements and O elements into the sulfide solid electrolyte, P-O and M-S bonds will be formed in the crystal structure, thereby increasing the intrinsic resistance to atmospheric degradation, and effectively reducing the generation of H₂S, increasing the possibility of batteries in actual production, thereby increasing the air stability and chemical stability of the sulfide solid electrolyte. In this way, the sulfide solid electrolyte has a high stability and a specific reactivity, and the conductivity of the sulfide solid electrolyte may be improved, the air stability may be increased, and the electrolyte/active material interface properties may be enhanced, thereby improving compatibility with active materials. Introducing halogen elements stabilizes the matrix structure of the sulfide solid electrolyte, thereby improving ionic conductivity and electrochemical stability and enhancing voltage stability. Through adopting the solid electrolyte films in bipolar batteries, it is possible to reduce packaging steps, simplify the packaging process of bipolar batteries, and greatly reduce the use of packaging materials, so that the battery capacity, the number of cycles and the energy density of bipolar batteries may be enhanced, while the safety performance of lithium ions may be increased.

## Claims

1. A sulfide solid electrolyte, the sulfide solid electrolyte having a molecular formula of LiₐP_{1-b}M_{b}S_{c}O_{d}Xₑ; wherein: 5<a<6; 0<b<1; 1.5<c<5, 0<d<2.5, 4<c+d<5, 1<e<2; M is selected from one or more of Al, Ga, In, Ti, Sc, As, Sb, Bi, V or Nb; X is selected from one or more of Cl, Br or I.

2. The sulfide solid electrolyte according to claim 1, wherein the M is selected from one or more of Sb, In or Bi.

3. The sulfide solid electrolyte according to claim 1, wherein the X is selected from Cl; a value range of the b is 0<b<0.1.

4. A method for preparing the sulfide solid electrolyte according to any one of claims 1 to 3, comprising steps of:
mixing raw materials uniformly according to stoichiometry based on a chemical formula of the sulfide solid electrolyte, placing the raw materials in a ball mill jar for ball milling to obtain sulfide solid electrolyte precursor powder; and
subjecting the sulfide solid electrolyte precursor powder to calcination at a preset temperature to obtain the sulfide solid electrolyte.

5. The method for preparing the sulfide solid electrolyte according to claim 4, wherein the raw materials comprise Li₂S, LiX, P₂S₅ and oxides corresponding to M elements, the X is selected from one or more of Cl, Br or I, the M is selected from one or more of Al, Ga, In, Ti, Sc, As, Sb, Bi, V or Nb.

6. The method for preparing the sulfide solid electrolyte according to claim 4, wherein a ball milling time is 20 hours to 30 hours, a ball milling speed is 500rpm to 600rpm, and a ball-to-material ratio is 35:1 to 45:1.

7. The method for preparing the sulfide solid electrolyte according to claim 4, wherein the preset temperature is 450°C to 550°C, and a time for the calcination is 20 hours to 30 hours.

8. An all-solid-state lithium-ion battery, at least comprising:
a plurality of bipolar electrode sheets, a positive electrode active material layer and a negative electrode active material layer respectively disposed on both sides of the bipolar electrode sheets, the positive electrode active material layer and the negative electrode active material layer between the adjacent bipolar electrode sheets being arranged opposite to each other; and
a solid electrolyte film, the solid electrolyte film being disposed between the adjacent bipolar electrode sheets;
wherein the positive electrode active material layer, the negative electrode active material layer and the solid electrolyte film comprise the sulfide solid electrolyte according to any one of claims 1-3.

9. The all-solid-state lithium-ion battery according to claim 8, wherein in the positive electrode active material layer or the negative electrode active material layer, a content of the sulfide solid electrolyte is 20wt% to 30wt%.

10. The all-solid-state lithium-ion battery according to claim 8, wherein the solid electrolyte film comprises the sulfide solid electrolyte and a binder, and the solid electrolyte film is obtained through a dry process preparation method or a wet process preparation method.

11. An electronic device, comprising the all-solid-state lithium-ion battery according to any one of claims 8-10.
